# EUROPEAN PATENT APPLICATION

(11) **EP 4 227 360 A1**
(43) Date of publication of application: **16.08.2023**
(21) Application number: 21877740.7
(22) Date of filing: 08.10.2021
(51) Int. Cl.: C08L 23/10, C08J 3/22, C08K 5/13, C08K 5/3435, C08K 5/3477

(54) **LIGHT-STABILIZER MASTERBATCH AND METHOD FOR PRODUCING POLYPROPYLENE-BASED RESIN COMPOSITION USING SAME**

(30) Priority: 08.10.2020 JP 2020170618
(71) Applicant: ADEKA CORPORATION, Arakawa-ku Tokyo 116-8554 (JP)
(72) Inventor: YAMASHITA Kenji, Saitama-shi, Saitama 336-0022 (JP); HIDANO Tomohiro, Saitama-shi, Saitama 336-0022 (JP); UEDA Marina, Saitama-shi, Saitama 336-0022 (JP); AYABE Takashi, Saitama-shi, Saitama 336-0022 (JP)
(74) Representative: Müller-Boré & Partner Patentanwälte PartG mbB
(86) International application number: PCT/JP2021/037312
(87) International publication number: WO 2022/075441

(57) **Abstract**

A light stabilizer masterbatch contains a polypropylene-based resin (A) and a light stabilizer (B), where the light stabilizer masterbatch is composed such that the light stabilizer (B) includes a hindered amine compound (B-1) including one or two or more predetermined compounds and includes a predetermined phenol-based antioxidant (B-2), the content of the light stabilizer (B) with respect to 100 parts by mass of the polypropylene-based resin (A) is more than 10 parts by mass.

## Description

### TECHNICAL FIELD

The present invention relates to a light stabilizer masterbatch and a production method for a polypropylene-based resin composition using the same.

### BACKGROUND ART

Various developments have so far been made on light stabilizer masterbatches. As a technique in this field, for example, the technique described in Patent Document 1 is known. Patent Document 1 describes a light stabilizer masterbatch containing a polypropylene-based resin, a hindered amine compound, and a benzoate compound.

### RELATED DOCUMENT

### PATENT DOCUMENT

[Patent Document 1] Japanese Unexamined Patent Publication No. 2016-172832

### SUMMARY OF THE INVENTION

### TECHNICAL PROBLEM

However, as a result of studies by the inventors of the present invention, it was revealed that the light stabilizer masterbatch described in Patent Document 1 has room for improvement in terms of thermal stability.

### SOLUTION TO PROBLEM

As a result of further studies, the inventors of the present invention found that in a light stabilizer masterbatch containing a polypropylene-based resin and a light stabilizer, thermal stability is improved in a case of using in combination a predetermined hindered amine compound and a phenol-based antioxidant as a light stabilizer, whereby the present invention was completed.

According to the present invention, there is provided a light stabilizer masterbatch containing a polypropylene-based resin (A) and a light stabilizer (B), in which the light stabilizer (B) includes a hindered amine compound (B-1) and a phenol-based antioxidant (B-2), the hindered amine compound (B-1) includes one or two or more compounds represented by General Formula (1), and a content of the light stabilizer (B) with respect to 100 parts by mass of the polypropylene-based resin (A) is more than 10 parts by mass. 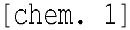 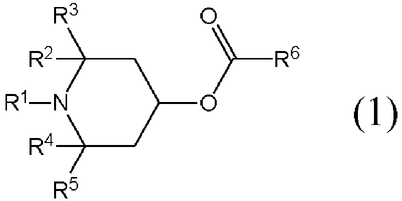 (in General Formula (1), R¹ represents a hydrogen atom or a methyl group, R² to R⁵ each independently represent an alkyl group having 1 to 6 carbon atoms, and R⁶ represents a fatty acid residue having 7 to 29 carbon atoms)

In addition, according to the present invention, there is provided a production method for a polypropylene-based resin composition, including a step of blending the light stabilizer masterbatch so that a blending amount of the light stabilizer (B) is 0.01 to 10 parts by mass with respect to 100 parts by mass of the polypropylene-based resin (A).

### ADVANTAGEOUS EFFECTS OF INVENTION

According to the present invention, there are provided a light stabilizer masterbatch having excellent thermal stability and a production method for a polypropylene-based resin composition using the same.

### DESCRIPTION OF EMBODIMENTS

A light stabilizer masterbatch of the present embodiment will be outlined.

The light stabilizer masterbatch contains a polypropylene-based resin (A) and a light stabilizer (B), where the light stabilizer masterbatch is composed such that the light stabilizer (B) includes a hindered amine compound (B-1) and a phenol-based antioxidant (B-2), the hindered amine compound (B-1) includes one or two or more compounds represented by General Formula (1), and the content of the light stabilizer (B) with respect to 100 parts by mass of the polypropylene-based resin (A) is more than 10 parts by mass. 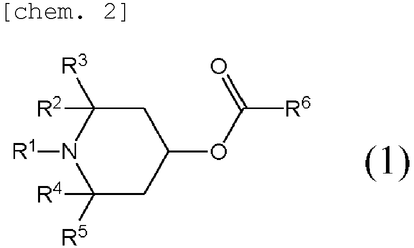 (in General Formula (1), R¹ represents a hydrogen atom or a methyl group, R² to R⁵ each independently represent an alkyl group having 1 to 6 carbon atoms, and R⁶ represents a fatty acid residue having 7 to 29 carbon atoms)

The light stabilizer masterbatch is a solid composition in which a high-concentration light stabilizer is dispersed in a base resin such as a polypropylene-based resin, which is used by being diluted at a predetermined ratio at the time of the production of a resin composition.

According to the knowledge of the inventors of the present invention, the following facts were found.

In a case where the light stabilizer masterbatch is transported and stored after production, it is not necessarily kept under constant environmental conditions, and thus thermal history may be added due to the fluctuation in thermal environmental conditions such as the outside air temperature. For example, the remarkable fluctuation in thermal environmental conditions is observed during overseas transportation.

In addition, in a case where a thermal history is added for a predetermined period of time, the yellow index of the light stabilizer masterbatch may change.

As a result of diligent studies in consideration of such circumstances, it was found that in a case of using in combination a predetermined hindered amine compound and a phenol-based antioxidant, it is possible to realize a light stabilizer masterbatch having excellent thermal stability.

According to the present embodiment, it is possible to realize a light stabilizer masterbatch having excellent thermal stability.

In addition, the light stabilizer masterbatch of the present embodiment has an excellent color tone.

Using such a light stabilizer masterbatch, it is possible to provide a polypropylene-based resin composition that is obtained by carrying out blending so that a blending amount of the light stabilizer (B) is 0.01 to 10 parts by mass with respect to 100 parts by mass of the polypropylene-based resin (A).

Hereinafter, the light stabilizer masterbatch of the present embodiment will be described in detail.

The light stabilizer masterbatch contains a polypropylene-based resin (A).

Examples of the polypropylene-based resin (A) include polypropylene-based resins such as homopolypropylene, random copolymer polypropylene, block copolymer polypropylene, impact copolymer polypropylene, high impact copolymer polypropylene, and maleic anhydride-modified polypropylene.

Among these, homopolypropylene is preferably used since it has excellent compatibility.

In addition, in the light stabilizer masterbatch, other resins may be blended in addition to the polypropylene-based resin (A). Examples of the other resins include a polyolefin-based resin other than the polypropylene-based resin (A), a polyamide-based resin, a polyester-based resin, a polyacetal resin, polylactic acid, polyphenylene sulfide, a polycarbonate resin, a styrene-based resin, an acrylic resin, a urethane-based resin, a halogen-containing resin, a petroleum resin, a coumarone resin, polyvinyl alcohol, polyvinyl acetate, and polyphenylene oxide.

In a case where the other resins are blended, the blending amount thereof is, for example, 50 parts by mass or less in total with respect to 100 parts by mass of the polypropylene-based resin (A), where it is preferably 30 parts by weight or less and more preferably 20 parts by weight.

The lower limit of the content of the polypropylene-based resin (A) in the light stabilizer masterbatch is, for example, 10% by mass or more, preferably 30% by mass or more, and more preferably 40% by mass or more in 100% by mass of the light stabilizer masterbatch.

On the other hand, the upper limit of the content of the polypropylene-based resin (A) in the light stabilizer masterbatch is, for example, 80% by mass or less, preferably 60% by mass or less, and more preferably 50% by mass or more in 100% by mass of the light stabilizer masterbatch.

The light stabilizer masterbatch contains a light stabilizer (B) .

In the light stabilizer masterbatch, the lower limit of the content of the light stabilizer (B) with respect to 100 parts by mass of the polypropylene-based resin (A) is more than 10 parts by mass, preferably 20 parts by mass or more, more preferably 40 parts by mass or more, and still more preferably 80 parts by mass or more. The upper limit of the content of such a light stabilizer (B) is not particularly limited; however, it may be, for example, 400 parts by mass or less.

In this case, the light stabilizer (B) includes at least the hindered amine compound (B-1) and the phenol-based antioxidant (B-2) and may further include the benzoate compound (B-3) and/or an ultraviolet absorbing agent (B-4), as necessary.

The light stabilizer (B) includes the hindered amine compound (B-1) .

The hindered amine compound (B-1) includes one or two or more compounds represented by General Formula (1). 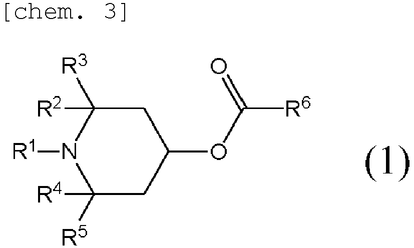 (in General Formula (1), R¹ represents a hydrogen atom or a methyl group, R² to R⁵ each independently represent an alkyl group having 1 to 6 carbon atoms, and R⁶ represents a fatty acid residue having 7 to 29 carbon atoms)

Examples of the alkyl group having 1 to 6 carbon atoms include a methyl group, an ethyl group, a propyl group, an isopropyl group, a butyl group, an isobutyl group, a sec-butyl group, a tert-butyl group, a pentyl group, a sec-pentyl group, a tert-pentyl group, and a hexyl group. Among these, a methyl group, a tert-butyl group, or a tert-pentyl group is preferable, and a methyl group is particularly preferable.

The fatty acid residue having 7 to 29 carbon atoms is, for example, an alkyl group having 7 to 29 carbon atoms or an alkenyl group having 7 to 29 carbon atoms, where it is preferably an alkyl group having 9 to 25 carbon atoms and more preferably an alkyl group having 11 to 21 carbon atoms.

Among such alkyl groups, for example, a decyl group, an undecyl group, a dodecyl group, a tridecyl group, a tetradecyl group, a pentadecyl group, a hexadecyl group, a heptadecyl group, an octadecyl group, or a nonadecyl group may be used.

In the compound represented by General Formula (1), R¹ is preferably a methyl group. In this case, in this case, the light stabilizer masterbatch has an excellent color tone.

The compound represented by General Formula (1) is obtained, for example, by reacting piperidinols with a fatty acid.

The fatty acid may be, for example, a saturated fatty acid or an unsaturated fatty acid, and one or more straight-chain fatty acids or branched-chain fatty acids may be used. As a purifying method for a fatty acid, distillation, recrystallization, a method using a filtering material, a method using an adsorbent, or the like can be appropriately used.

The hindered amine compound (B-1) may include, for example, one or two or more compounds selected from the group consisting of the following compounds, No. A1 to No. A6.

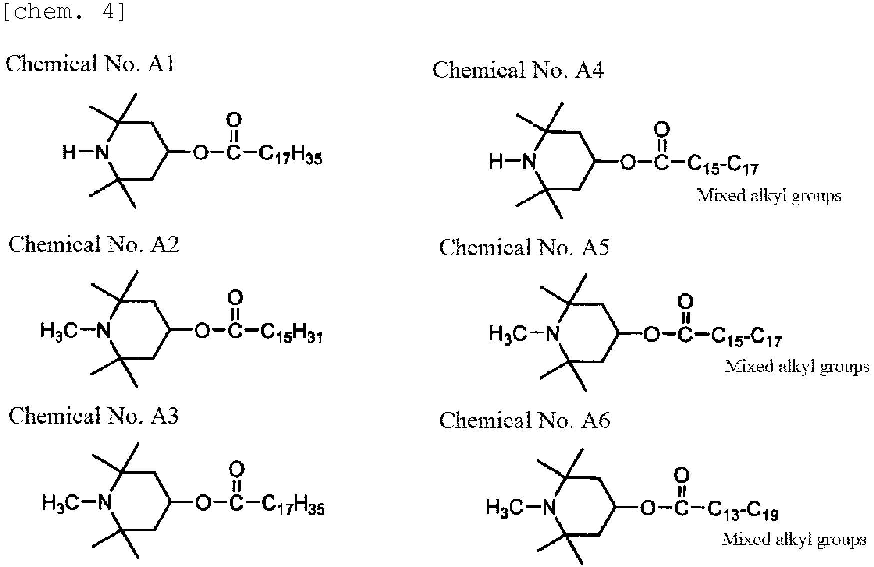

The hindered amine compound (B-1) may include at least one compound having a melting point of, for example, 80°C or lower, preferably 60°C or lower, and more preferably 40°C or lower. In addition, all components of the hindered amine compound (B-1) may be composed of compounds having a melting point of 80°C or lower.

This enhances the dispersibility of the hindered amine compound (B-1) .

The melting point indicates a melting point measured at a temperature rising rate of 1 °C/min using a melting point measuring instrument (model number MP-90) manufactured by Mettler-Toledo International Inc.

The light stabilizer (B) includes the phenol-based antioxidant (B-2) .

The phenol-based antioxidant (B-2) may include one or two or more compounds represented by General Formula (2). Thermal stability can be further enhanced by using a compound represented by General Formula (2). In addition, in this case, the light stabilizer masterbatch has a more excellent color tone. 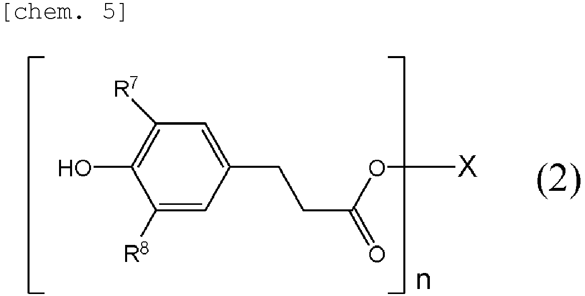 (In General Formula (2), R⁷ and R⁸ each independently represent an alkyl group having 1 to 6 carbon atoms, n represents 1, 2, or 4, where in a case where n is 1, X represents a fatty acid residue having 7 to 29 carbon atoms, in a case where n is 2, X represents a divalent group represented by Formula (a), and in a case where n is 4, X represents a tetravalent group represented by Formula (n).) 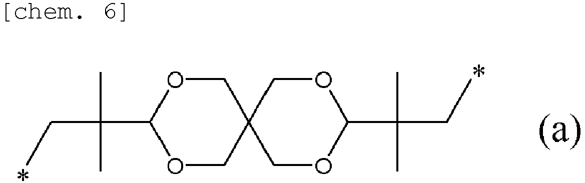 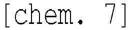 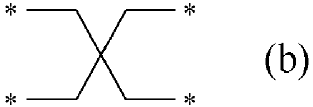 (In Formulae (a) and (b), * represents a position for bonding to an oxygen atom in General Formula (2).)

The phenol-based antioxidant (B-2) can include a compound represented by General Formula (2) in which n is any one of 1, 2, or 4. From the viewpoint of further improving thermal stability, the phenol-based antioxidant (B-2) preferably includes one or two or more compounds represented by General Formula (2) in which n is 1. In this case, a light stabilizer masterbatch having particularly excellent light stabilizing performance is obtained.

As the alkyl group having 1 to 6 carbon atoms in General Formula (2), those exemplified as the alkyl group having 1 to 6 carbon atoms in General Formula (1) can be used. The alkyl group having 1 to 6 carbon atoms in General Formula (2) is preferably a methyl group, a tert-butyl group, or a tert-pentyl group, and a tert-butyl group is particularly preferable.

As the fatty acid residue having 7 to 29 carbon atoms in General Formula (2), those exemplified as the fatty acid residue having 7 to 29 carbon atoms in General Formula (1) can be used. The fatty acid residue having 7 to 29 carbon atoms is preferably an alkyl group having 8 to 22 carbon atoms and more preferably an alkyl group having 14 to 20 carbon atoms.

The phenol-based antioxidant (B-2) may include one or two or more compounds represented by General Formula (3). The thermal stability can be further enhanced by using a compound represented by General Formula (3) . In addition, in this case, the blocking due to the aggregation of the light stabilizer masterbatch can be sufficiently suppressed. 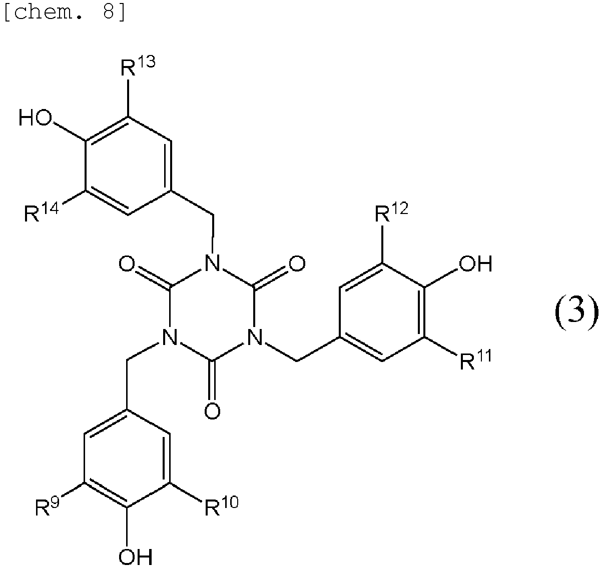 (In General Formula (3), R⁹ to R¹⁴ each independently represent an alkyl group having 1 to 6 carbon atoms.)

As the alkyl group having 1 to 6 carbon atoms in General Formula (3), those exemplified as the alkyl group having 1 to 6 carbon atoms in General Formula (1) can be used. The alkyl group having 1 to 6 carbon atoms in General Formula (3) is preferably a methyl group, a tert-butyl group, or a tert-pentyl group, and a tert-butyl group is particularly preferable.

The phenol-based antioxidant (B-2) may include at least one compound having a melting point of, for example, 40°C or higher, preferably 45°C or higher, and more preferably 60°C or higher. This makes it possible to suppress the exudation of components on the surface of the light stabilizer masterbatch. In addition, the phenol-based antioxidant (B-2) may include at least one compound having a melting point of, for example, 80°C or lower and preferably 60°C or lower. This enhances the dispersibility of the phenol-based antioxidant (B-2).

The contents of the hindered amine compound (B-1) and the phenol-based antioxidant (B-2) in the light stabilizer (B) are, for example, 50% by mass or more, preferably 70% by mass or more, and more preferably 90% by mass or more in 100% by mass of the light stabilizer (B).

In the light stabilizer masterbatch, the blending ratio of the phenol-based antioxidant (B-2) to the hindered amine compound (B-1) is, for example, 0.05 or more and 10 or less, preferably 0.08 or more and 9 or less, more preferably 0.1 or more and 4.0 or less, still more preferably 0.15 or more and 2.5 or less, and even still more preferably 0.2 or more and 1.5 or less in terms of mass. In a case of being set within such a range, the thermal stability can be further enhanced.

The light stabilizer (B) may include the benzoate compound (B-3) .

The benzoate compound (B-3) may contain one or two or more compounds represented by General Formula (5). 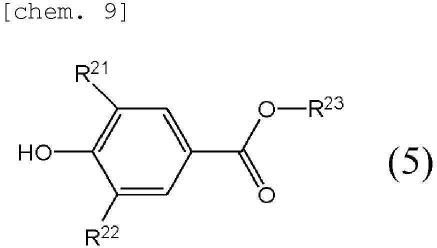 (In General Formula (5), R²¹ and R²² each independently represent an alkyl group having 1 to 6 carbon atoms, and R²³ represents a fatty acid residue having 7 to 29 carbon atoms.)

As the alkyl group having 1 to 6 carbon atoms in General Formula (5), those exemplified as the alkyl group having 1 to 6 carbon atoms in General Formula (1) can be used. The alkyl group having 1 to 6 carbon atoms in General Formula (5) is preferably a methyl group, a tert-butyl group, or a tert-pentyl group, and a tert-butyl group is particularly preferable.

As the fatty acid residue having 7 to 29 carbon atoms in General Formula (5), those exemplified as the fatty acid residue having 7 to 29 carbon atoms in General Formula (1) can be used. The fatty acid residue having 7 to 29 carbon atoms is preferably an alkyl group having 8 to 22 carbon atoms and more preferably an alkyl group having 10 to 20 carbon atoms.

The benzoate compound (B-3) may include, for example, one or two or more compounds selected from the group consisting of the following compounds, No. C1 to No. C5.

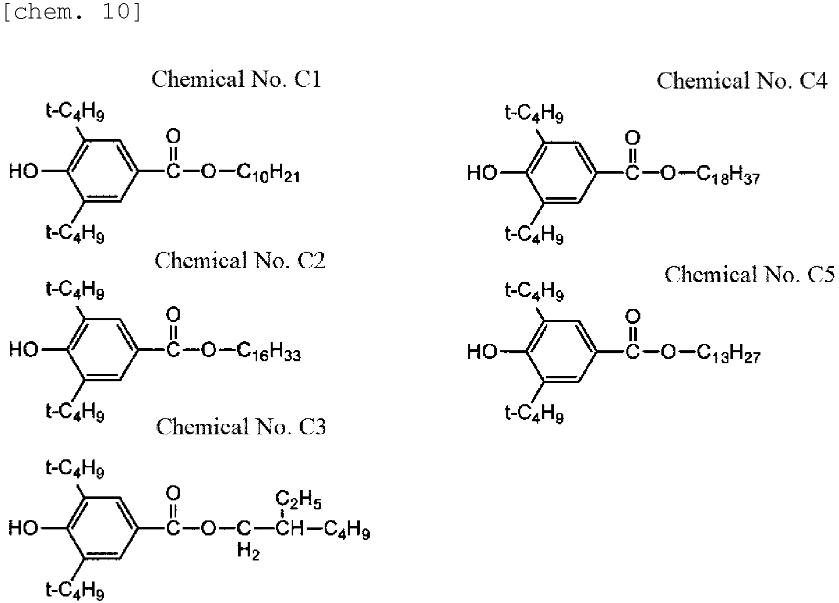

The content of the benzoate compound (B-3) in the light stabilizer (B) is, for example, 1% by mass or more and 40% by mass or less, and preferably 2% by mass or more and 15% by mass or less in 100% by mass of the light stabilizer (B).

The light stabilizer (B) may include one or two or more ultraviolet absorbing agents (B-4).

Examples of the ultraviolet absorbing agent (B-4) include a benzophenone-based ultraviolet absorbing agent, a benzotriazole-based ultraviolet absorbing agent, a triazine-based ultraviolet absorbing agent, a salicylic acid ester-based ultraviolet absorbing agent, and a cyanoacrylate-based ultraviolet absorbing agent. As the ultraviolet absorbing agent, these may be used alone, or two or more thereof may be used in combination. Among these, a benzotriazole-based ultraviolet absorbing agent is particularly preferable.

A known benzophenone-based ultraviolet absorbing agent is used; however, examples thereof include 2,4-dihydroxybenzophenone 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, 2-hydroxy-4-tert-butyl-4'-(2-methacryloyloxyethoxyethoxy)benzoph enone, 5,5'-methylenebis(2-hydroxy-4-methoxybenzophenone), and 2-hydroxy-4-methoxy-2'-carboxybenzophenone.

A known benzotriazole-based ultraviolet absorbing agent is used; however, examples thereof include 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3-dodecyl-5-methylphenyl)benzotriazole, 2-(2-hydroxy-3-tert-butyl-5-alkoxycarbonylethylphenyl)triazole, 2-(2-hydroxy-3,5-dicumylphenyl)benzotriazole, 2,2'-methylenebis(4-tert-octyl-6-benzotriazolylphenol), a polyethylene glycol ester of 2-(2-hydroxy-3-tert-butyl-5-carboxyphenyl)benzotriazole, and 2-(2H-benzotriazol-2-yl)-4-6 bis(1-methyl-1-phenylethyl)phenol, as well as 2-(2H-benzotriazol-2-yl)-6-(dodecyl)-4-methylphenol, resorcinol monobenzoate, and 2,4-di-t-amylphenyl-3',5'-di-t-butyl-4'-hydroxybenzoate.

A known triazine-based ultraviolet absorbing agent is used; however, examples thereof include 2,4-bis(2,4-dimethylphenyl)-6-(2-hydroxy-4-octyloxyphenyl)-s-tri azine, 2,4,6,-tris(2-hydroxy-4-octyloxyphenyl)-1,3,5-triazine, 2-(2-hydroxy-4-octyloxyphenyl)-4,6-bis(2,4-dimethylphenyl)-1,3,5 -triazine, 2-[4,6-bis(2,4-dimethylphenyl)-1,3,5-triazin-2-yl]-5-(octyloxy)p henol, and 2-(4,6-diphenyl-1,3,5-triazin-2-yl)-5-(hexyloxy)phenol.

A known salicylic acid ester-based ultraviolet absorbing agent is used; however, examples thereof include ethylene glycol salicylate, phenyl salicylate, octyl salicylate, benzyl salicylate, p-tert-butylphenyl salicylate, and homomenthyl salicylate.

A known cyanoacrylate-based ultraviolet absorbing agent is used; however, examples thereof include ethyl-α-cyano-β,β-diphenyl acrylate and methyl-2-cyano-3-methyl-3-(p-methoxyphenyl)acrylate.

The content of the ultraviolet absorbing agent (B-4) in the light stabilizer (B) is, for example, 0.1% by mass or more and 10% by mass or less, and preferably 0.2% by mass or more and 5% by mass or less in 100% by mass of the light stabilizer (B).

The light stabilizer masterbatch may further contain a nucleating agent (C).

Examples of the nucleating agent (C) include carboxylic acid metal salts such as sodium benzoate, a 4-tert-butylbenzoic acid aluminum salt, sodium adipate, and disodium bicyclo[2.2.1]heptane-2,3-dicarboxylate, phosphoric acid ester metal salts such sodium bis(4-tert-butylphenyl)phosphate, sodium-2,2'-methylenebis(4,6-di-tert-butylphenyl)phosphate, and lithium-2,2'-methylenebis(4,6-di-tert-butylphenyl)phosphate, polyhydric alcohol derivatives such as dibenzylidene sorbitol, bis(methylbenzylidene)sorbitol, bis(3,4-dimethylbenzylidene)sorbitol, bis(p-ethylbenzylidene)sorbitol, and bis(dimethylbenzylidene)sorbitol, and amide compounds such as N,N',N''-tris[2-methylcyclohexyl]-1,2,3-propanetricarboxamide, N,N',N''-tricyclohexyl-1,3,5-benzenetricarboximide, N,N'-dicyclohexylnaphthalene dicarboxamide, and 1,3,5-tri(2,2-dimethylpropanamido)benzene. Among these, a phosphoric acid ester metal salt is particularly preferable. In addition, the phosphoric acid ester metal salt is preferably a phosphoric acid ester sodium salt such as sodium bis(4-tert-butylphenyl)phosphate or sodium 2,2'-methylenebis(4,6-di-tert-butylphenyl)phosphate. Further, the phosphoric acid ester sodium salt is particularly preferably sodium 2,2'-methylenebis(4,6-di-tert-butylphenyl)phosphate.

The content of the nucleating agent (C) in the light stabilizer masterbatch is, for example, 0.05 parts by mass or more and 5 parts by mass or less, preferably 0.1 parts by mass or more and 3 parts by mass or less, and more preferably 0.3 parts by mass or more and 1.5 parts by mass or less, with respect to the total of 100 parts by mass of the polypropylene-based resin (A) and the light stabilizer (B) .

Examples of the shape of the light stabilizer masterbatch include a pellet shape, a pill shape, and a powder shape. Among these, a pellet shape or a pill shape is preferable, and a pellet shape is particularly preferable, from the viewpoint of suppressing the exudation of components.

The surface of the light stabilizer masterbatch may be partially or wholly coated with a thermoplastic resin that does not contain the hindered amine compound (B-1) and the phenol-based antioxidant (B-2). This makes it possible to suppress the exudation of components.

In the light stabilizer masterbatch or the polypropylene-based resin composition obtained by blending a light stabilizer masterbatch, it is possible to blend a generally used resin additive within a range in which the effect of the present invention is not impaired. Examples of the resin additive include a phosphorus-based antioxidant, a thioether-based antioxidant, a flame retardant, a flame retardant aid, a lubricant, a filler, a metallic soap, hydrotalcites, an antistatic agent, a pigment, and a dye. These resin additives may be contained in the light stabilizer masterbatch of the present invention or may be added to the polypropylene-based resin composition separately from the light stabilizer masterbatch.

Examples of the phosphorus-based antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite bis(2,4-dicumylphenyl)pentaerythritol diphosphite, tetra(tridecyl)isopropylidene diphenol diphosphite, tetra(tridecyl)-4,4'-n-butylidenebis(2-tert-butyl -5-methylphenol) diphosphite, hexa(tridecyl)-1,1,3-tris(2-methyl-4-hydroxy-5-tert-butylphenyl) butane triphosphite, tetrakis(2,4-ditert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-ditert-butylphenyl)fluorophosphite, tris(2-[(2,4,8,10-tetrakis-tert-butyldibenzo[d,f][1,3,2]dioxapho sphepin-6-yl)oxy]ethyl)amine, and a phosphite of 2-ethyl-2-butylpropylene and 2,4,6-tri-tert-butylphenol.

Examples of the thioether-based antioxidant include tetrakis[methylene-3-(laurylthio)propionate]methane, bis(methyl-4-[3-n-alkyl(C12/C14)thiopropionyloxy] 5-tert-butyl phenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-tert-butyl-m-cresol), and distearyl-disulfide.

Examples of the flame retardant include aromatic phosphoric acid esters such as triphenyl phosphate, tricresyl phosphate, trixylenyl phosphate, cresyldiphenyl phosphate, cresyl-2,6-dixylenyl phosphate, resorcinol bis(diphenyl phosphate), (1-methylethylidene)-4,1-phenylenetetraphenyl diphosphate, 1,3-phenylenetetrakis(2,6-dimethylphenyl)phosphate, trade name ADEKA STAB FP-500 manufactured by ADEKA Corporation, trade name ADEKA STAB FP-600 manufactured by ADEKA Corporation, and trade name ADEKA STAB FP-800 manufactured by ADEKA Corporation; phosphonic acid esters such as divinyl phenylphosphonate, diallyl phenylphosphonate, and (1-butenyl)phenylphosphonate, phosphinic acid esters such as phenyl diphenylphosphinate, methyl diphenylphosphinate, and a 9,10-dihydro-9-oxa-10-phosphaphenanthrene-10-oxide derivative; phosphazene compounds such as bis(2-allylphenoxy)phosphazene and dicresyl phosphazene, phosphorus-based flame retardants such as melamine phosphate, melamine pyrophosphate, melamine polyphosphate, melam polyphosphate, ammonium polyphosphate, piperazine phosphate, piperazine pyrophosphate, piperazine polyphosphate, a phosphorus-containing vinylbenzyl compound, and red phosphorus; metal hydroxides such as magnesium hydroxide and aluminum oxide; and bromine-based flame retardants such as a brominated bisphenol A-type epoxy resin, a brominated phenol novolak-type epoxy resin, hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, and a brominated polyphenylene ether, a brominated polystyrene, as well as 2,4,6-tris (tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with an anti-drip agent such as a fluororesin or with a flame retardant aid such as polyhydric alcohol or hydrotalcite.

The lubricating agent is added for the intended purpose of imparting lubricity to the surface of the molded body and enhancing the scratch-preventing effect. Examples of the lubricating agent include unsaturated fatty acid amides such as oleic acid amide and erucic acid amide; and saturated fatty acid amides such as behenic acid amide and stearic acid amide. One kind of these may be used alone, or two or more kinds thereof may be used in combination.

Examples of the filler include silica, talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, alumina, potassium titanate whiskers, wollastonite, and fibrous magnesium oxysulfate, where the particle diameter (the fiber diameter, the fiber length, or the aspect ratio in the fibrous shape) can be appropriately selected and used. In addition, as the filler, the one that has been subjected to a surface treatment can be used as necessary.

Examples of the metallic soap include a fatty acid metal salt having 1 to 40 carbon atoms. Examples of the fatty acid of the fatty acid metal salt include saturated fatty acids such as acetic acid, propionic acid, butyric acid, valeric acid, isovaleric acid, caproic acid, enanthic acid, caprylic acid, pelargonic acid, capric acid, 2-ethylhexanoic acid, undecyl acid, lauric acid, tridecyl acid, myristic acid, pentadecylic acid, palmitic acid, margaric acid, stearic acid, nonadecylic acid, arachidic acid, heneicosylic acid, behenic acid, tricosylic acid, lignoceric acid, cerotic acid, montanoic acid, and melissic acid; linear unsaturated fatty acids such as 4-decenoic acid, 4-dodecenoic acid, palmitoleic acid, α-linolenic acid, linoleic acid, γ-linolenic acid, stearidonic acid, petroselinic acid, oleic acid, elaidic acid, vaccenic acid, eicosapentaenoic acid, docosapentaenoic acid, and docosahexaenoic acid and; and aromatic fatty acids such as trimesic acid. In the present invention, an aliphatic group having 7 to 21 carbon atoms is preferable, and a saturated fatty acid such as myristic acid, stearic acid, or 12-hydroxystearic acid is particularly preferable.

Examples of the metal of the fatty acid metal salt include an alkali metal, magnesium, calcium, strontium, barium, titanium, manganese, iron, zinc, silicon, zirconium, yttrium, barium, and hafnium. Among these, an alkali metal such as sodium, lithium, or potassium is particularly preferably used.

The hydrotalcites are composite salt compounds consisting of magnesium, aluminum, a hydroxyl group, a carbonate group, and any water of crystallization, which are known as natural or synthetic products, and examples thereof include those obtained by substituting a part of magnesium or aluminum with metals such as an alkali metal and zinc and those obtained by substituting hydroxyl groups or carbonate groups with other anionic groups.

The hydrotalcites may be ones obtained by dehydrating water of crystallization, and they may be ones coated with a higher fatty acid such as stearic acid, a higher fatty acid metal salt such as an oleic acid alkali metal salt, an organic sulfonic acid metal salt such as a dodecylbenzenesulfonic acid metal salt, a higher fatty acid amide, a higher fatty acid ester, wax, or the like.

The hydrotalcites may be natural products or may be synthetic products. Examples of the method of synthesizing such compounds include known methods described in Japanese Examined Patent Publication No. S46-2280, Japanese Examined Patent Publication No. S50-30039, Japanese Examined Patent Publication No. S51-29129, Japanese Examined Patent Publication No. H03-36839, Japanese Unexamined Patent Publication No. S61-174270, and Japanese Unexamined Patent Publication No. H05-179052. In addition, the hydrotalcites can be used without being restricted by the crystal structure, crystal particle, or the like thereof.

Examples of the antistatic agent include cationic antistatic agents such as a fatty acid quaternary ammonium ion salt and a polyamine quaternary salt; anionic antistatic agents such as a higher alcohol phosphate salt, a higher alcohol EO adduct, a polyethylene glycol fatty acid ester, an anionic alkylsulfonic acid salt, a higher alcohol sulfuric acid salt, a sulfuric acid salt of a higher alcohol ethylene oxide adduct, and a phosphoric acid salt of a higher alcohol ethylene oxide adduct; nonionic antistatic agents such as a polyhydric alcohol fatty acid ester, and a polyglycol phosphoric acid ester, a polyoxyethylene alkyl allyl ether; and amphoteric antistatic agents such as an amphoteric alkyl betaine such as a betaine alkyldimethylaminoacetate, and an imidazoline-type amphoteric surfactant. Such an antistatic agent may be used alone, or two or more antistatic agents may be used in combination.

A commercially available pigment can also be used as the pigment, and examples thereof include Pigment Red 1, 2, 3, 9, 10, 14, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, 254; Pigment Orange 13, 31, 34, 36, 38, 43, 46, 48, 49, 51, 52, 55, 59, 60, 61, 62, 64, 65, 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, 185; Pigment Green 7, 10, 36; Pigment Blue 15, 15:1, 15:2, 15:3, 15:4, 15:5, 15:6, 22, 24, 56, 60, 61, 62, 64; and Pigment Violet 1, 19, 23, 27, 29, 30, 32, 37, 40, 50.

The light stabilizer masterbatch is obtained, for example, by subjecting the above-described constitutional components to melting and kneading.

Specifically, the production method for a light stabilizer masterbatch may include a step of carrying out dry blending with a mixer such as a Henschel mixer or a tumbler and carrying out kneading at a processing temperature of 180°C to 280°C using an extruder, a Banbury mixer, a roll, a Brabender plastograph, a kneader, or the like. It is preferable to use a Henschel mixer as the mixer and an extruder, particularly a twin-screw extruder, as the processing machine.

The production method for a polypropylene-based resin composition according to the present embodiment includes a step of blending the light stabilizer masterbatch so that a blending amount of the light stabilizer (B) is 0.01 to 10 parts by mass and preferably 0.1 to 1 part by mass with respect to 100 parts by mass of the polypropylene-based resin (A).

Regarding the molding method, the polypropylene-based resin composition can be molded using a known molding method, and it is possible to use, for example, an injection molding method, an extrusion molding method, a blow molding method, a vacuum molding method, an inflation molding method, a calender molding method, a slush molding method, a dip molding method, or a foam molding method. A molded article can be obtained by molding the polypropylene-based resin composition.

The use application of the polypropylene-based resin composition is not particularly limited, and the polypropylene-based resin composition can be used in automobile parts, building materials, agricultural materials, packaging materials, daily used goods, daily goods, toys, and the like as films, sheets, and molded articles, which are obtained by known methods such as extrusion molding, injection molding, blow molding, blow molding.

The embodiments according to the present invention have been described above; however, these are examples according to the present invention, and thus it is possible to adopt various configurations other than the above. In addition, the present invention is not limited to the embodiments described above and modifications, improvements, and the like are included in the present invention in a range in which it is possible to achieve the purpose of the present invention.

Hereinafter, descriptions for examples of reference forms are appended.
1A. A light stabilizer masterbatch containing:
   a polypropylene-based resin (A); and
   a light stabilizer (B),
   in which the light stabilizer (B) includes a hindered amine compound (B-1) and a phenol-based antioxidant (B-2),
   the hindered amine compound (B-1) includes one or two or more compounds represented by General Formula (1), and
   the content of the light stabilizer (B) with respect to 100 parts by mass of the polypropylene-based resin (A) is more than 10 parts by mass.
2A. The light stabilizer masterbatch according to 1A, in which the phenol-based antioxidant (B-2) includes one or more compounds represented by General Formula (2).
3A. The light stabilizer masterbatch according to 2A, in which the light stabilizer masterbatch contains the compound represented by General Formula (2) in which n is 1.
4A. The light stabilizer masterbatch according to 1A, in which the phenol-based antioxidant (B-2) includes one or more compounds represented by General Formula (3).
5A. The light stabilizer masterbatch according to any one of 1A to 4A, in which the light stabilizer (B) includes a benzoate compound (B-3), and the benzoate compound (B-3) includes one or more compounds represented by General Formula (5).
6A. The light stabilizer masterbatch according to any one of 1A to 5A, in which the light stabilizer (B) includes an ultraviolet absorbing agent (B-4).
7A. The light stabilizer masterbatch according to any one of 1A to 6A, in which the light stabilizer masterbatch contains a nucleating agent (C).
8A. The light stabilizer masterbatch according to any one of 1A to 7A, in which the hindered amine compound (B-1) includes a compound having a melting point of 80°C or lower.
9A. A production method for a polypropylene-based resin composition, including:
   a step of blending the light stabilizer masterbatch according to any one of 1A to 8A so that a blending amount of the light stabilizer (B) is 0.01 to 10 parts by mass with respect to 100 parts by mass of the polypropylene-based resin (A).
1B. A light stabilizer masterbatch containing:
   a polypropylene-based resin (A); and
   a light stabilizer (B),
   in which the light stabilizer (B) includes a hindered amine compound (B-1) and a phenol-based antioxidant (B-2),
   the hindered amine compound (B-1) includes one or two or more compounds represented by General Formula (1), and
   the phenol-based antioxidant (B-2) includes one or two or more compounds selected from the group consisting of the compound represented by General Formula (2) and the compound represented by General Formula (3), and
   the content of the light stabilizer (B) with respect to 100 parts by mass of the polypropylene-based resin (A) is more than 10 parts by mass.

### [Examples]

Hereinafter, the present invention will be described in detail with reference to Examples; however, the present invention is not limited to the description of these Examples.

### <Production of light stabilizer masterbatch>

The polypropylene-based resin (A), the light stabilizer (B), and, as necessary, the nucleating agent (C) were blended according to the blending proportion shown in Table 1, and using an extruder (manufactured by Japan Steel Works, Ltd., TEX28V), the resultant mixture was subjected to melting and kneading under the conditions of a melting temperature of 230°C and a screw speed of 150 rpm, followed by granulation, to produce a pellet-shaped light stabilizer masterbatch.

Raw material information described in Table 1 is shown below.
Polypropylene-based resin (A)
Homopolypropylene (A-1) (MFR (230°C, 2.16 kg) = 11 g/10 min)
Light stabilizer (B)
Hindered amine compound (B-1)
   · Compound (B-1a) represented by the following chemical formula (melting point: 33°C) 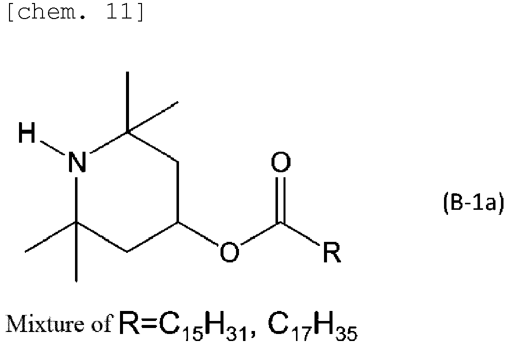
   · Compound (B-1b) represented by the following chemical formula (melting point: 40°C) 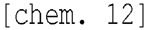 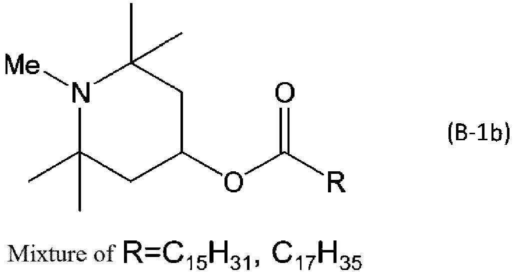
Phenol-based antioxidant (B-2)
   · Compound (B-2a) represented by the following chemical formula (melting point: 51°C) 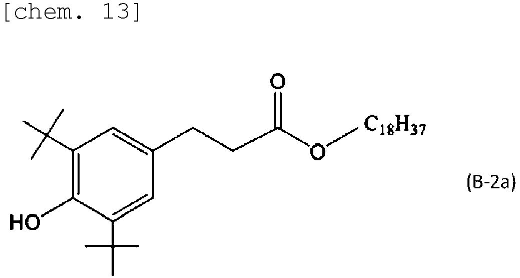
   · Compound (B-2b) represented by the following chemical formula (melting point: 220°C) 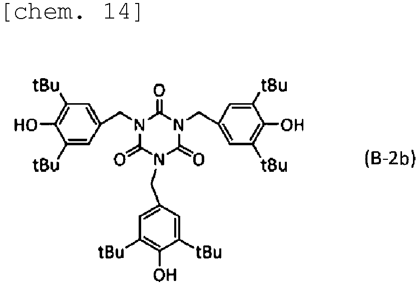
   · Compound (B-2c) represented by the following chemical formula (melting point: 110°C) 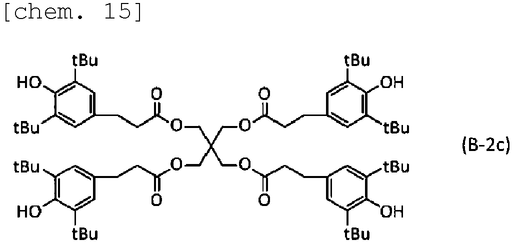
   · Benzoate compound (B-3) : A compound (B-3) represented by the following chemical formula (melting point: 62°C) 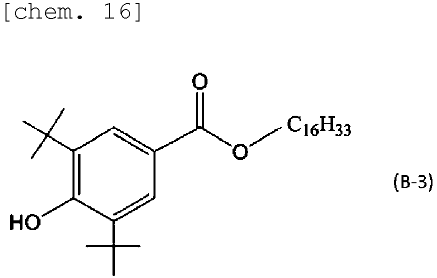
   · Ultraviolet absorbing agent (B-4): A compound (B-4) represented by the following chemical formula (a benzotriazole-based ultraviolet absorbing agent) 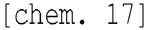 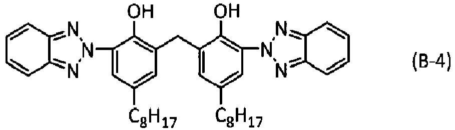
Nucleating agent (C)
   · Nucleating agent (C-1): Sodium 2,2'-methylenebis(4,6-di-tert-butylphenyl)phosphate

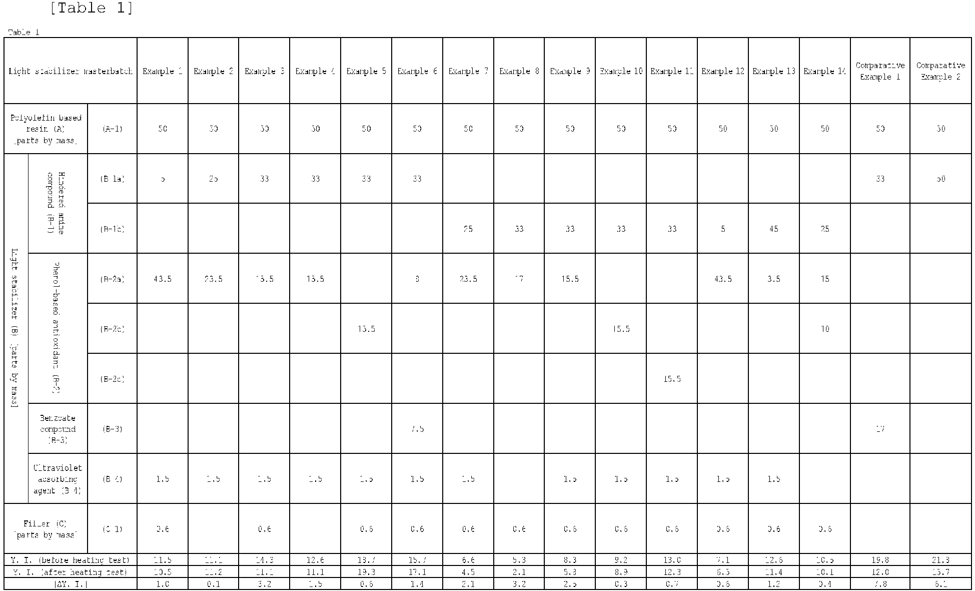

The obtained light stabilizer masterbatch was evaluated for the following items.

### (Thermal stability)

The obtained pellet-shaped light stabilizer masterbatch was allowed to stand for 7 days in an environment of a temperature of 28°C and a humidity of 70%, and the yellow index (Y. I.) was measured using a spectrocolorimeter (SD3000, manufactured by NIPPON DENSHOKU INDUSTRIES Co., Ltd.). A heating test, in which the light stabilizer masterbatch after the measurement of Y. I. was placed in an oven at 60°C and allowed to stand for two days while the temperature was maintained, was carried out. Then, the masterbatch was removed from the oven and Y. I. was measured. Then, the absolute value of the difference |ΔY. I.| between Y. I. after the heating test and Y. I. before the heating test was calculated and used as an index of the thermal stability of the light stabilizer masterbatch. The results are also shown in Table 1.

From the results, it was seen that in the light stabilizer masterbatches of Examples 1 to 14, |ΔY. I.| is large and thus thermal stability is sufficient as compared with those of Comparative Examples 1 and 2. Since each of such light stabilizer masterbatches of Examples has good compatibility with the polypropylene-based resin, it can be suitably used as a masterbatch for a polypropylene-based resin composition.

This application claims priority based on Japanese Patent Application No. 2020-170618 filed on October 8, 2020, and all contents of the disclosure are incorporated herein.

## Claims

1. A light stabilizer masterbatch comprising:
a polypropylene-based resin (A); and
a light stabilizer (B),
wherein the light stabilizer (B) includes a hindered amine compound (B-1) and a phenol-based antioxidant (B-2),
the hindered amine compound (B-1) includes one or two or more compounds represented by General Formula (1), and
a content of the light stabilizer (B) with respect to 100 parts by mass of the polypropylene-based resin (A) is more than 10 parts by mass, 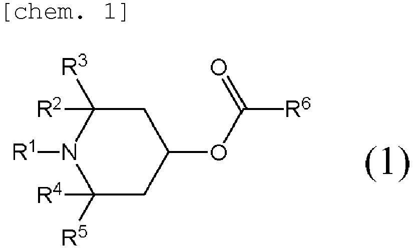
(in General Formula (1), R¹ represents a hydrogen atom or a methyl group, R² to R⁵ each independently represent an alkyl group having 1 to 6 carbon atoms, and R⁶ represents a fatty acid residue having 7 to 29 carbon atoms).

2. The light stabilizer masterbatch according to Claim 1,
wherein the phenol-based antioxidant (B-2) includes one or two or more compounds represented by General Formula (2), 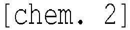 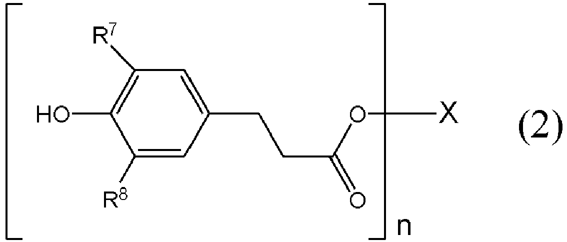
(in General Formula (2), R⁷ and R⁸ each independently represent an alkyl group having 1 to 6 carbon atoms, n represents 1, 2, or 4, where in a case where n is 1, X represents a fatty acid residue having 7 to 29 carbon atoms, in a case where n is 2, X represents a divalent group represented by Formula (a), and in a case where n is 4, X represents a tetravalent group represented by Formula (b)) 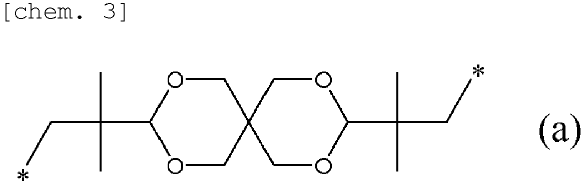 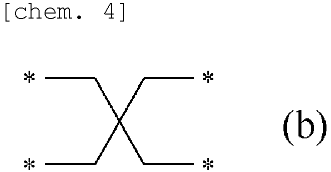
(in Formulae (a) and (b), * represents a position for bonding to an oxygen atom in General Formula (2)).

3. The light stabilizer masterbatch according to Claim 2,
wherein the light stabilizer masterbatch contains the compound represented by General Formula (2) in which n is 1.

4. The light stabilizer masterbatch according to Claim 1,
wherein the phenol-based antioxidant (B-2) includes one or two or more compounds represented by General Formula (3), 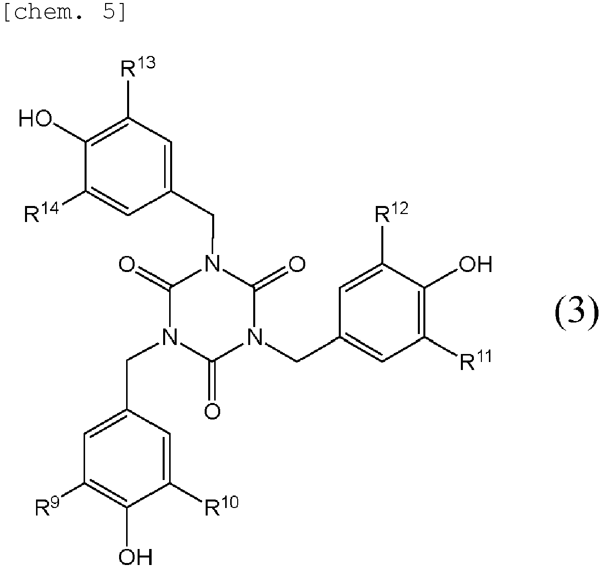
(in General Formula (3), R⁹ to R¹⁴ each independently represent an alkyl group having 1 to 6 carbon atoms).

5. The light stabilizer masterbatch according to any one of Claims 1 to 4,
wherein the light stabilizer (B) includes a benzoate compound (B-3), and
the benzoate compound (B-3) includes one or two or more compounds represented by General Formula (5), 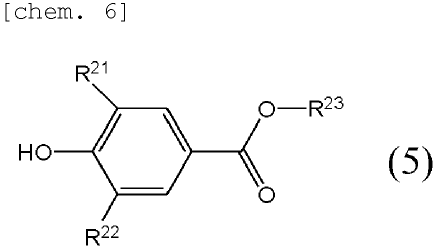
(in General Formula (5), R²¹ and R²² each independently represent an alkyl group having 1 to 6 carbon atoms, and R²³ represents a fatty acid residue having 7 to 29 carbon atoms).

6. The light stabilizer masterbatch according to any one of Claims 1 to 5,
wherein the light stabilizer (B) includes an ultraviolet absorbing agent (B-4).

7. The light stabilizer masterbatch according to any one of Claims 1 to 6,
wherein the light stabilizer masterbatch contains a nucleating agent (C).

8. The light stabilizer masterbatch according to any one of Claims 1 to 7,
wherein the hindered amine compound (B-1) includes a compound having a melting point of 80°C or lower.

9. A production method for a polypropylene-based resin composition, comprising:
a step of blending the light stabilizer masterbatch according to any one of Claims 1 to 8 so that a blending amount of the light stabilizer (B) is 0.01 to 10 parts by mass with respect to 100 parts by mass of the polypropylene-based resin (A).
